# EUROPÄISCHE PATENTSCHRIFT

(11) **EP 0 512 274 B1**
(45) Veröffentlichungstag und Bekanntmachung des Hinweises auf die Patenterteilung: **31.01.1996**
(21) Anmeldenummer: 92106163.6
(22) Anmeldetag: 09.04.1992
(51) Int. Cl.: A21D 13/08, A23L 1/212, A23G 9/02, A23L 3/36

(54) **Tiefgefrorene gebrauchsfertige Fruchtbackmischung**
Deep-frozen, ready-to-use, cookable fruit mixture
Mélange de fruits à cuire surgelé, prêt à l'emploi

(30) Priorität: 09.04.1991 DE 4111476
(43) Veröffentlichungstag der Anmeldung: 11.11.1992
(73) Patentinhaber: FIRMA FRUBELLA GmbH, D-45721 Haltern (DE)
(72) Erfinder: Niehoff, Leo, Sen., W-4358 Haltern (DE); Niehoff, Leo, Jr., Dipl.-Ing. (FH), W-4358 Haltern (DE); Niehoff, Jochem, Dipl. Betriebswirt, W-4358 Haltern (DE); Niehoff, Ulrich, W-4358 Haltern (DE)
(74) Vertreter: Patentanwälte Dipl.-Ing. R. Splanemann Dr. B. Reitzner Dipl.-Ing. K. Baronetzky

(56) Entgegenhaltungen:
- EP-A- 0 236 651
- FR-A- 2 268 476
- GB-A- 2 186 475
- US-A- 3 215 531
- US-A- 3 300 316
- US-A- 4 313 967

## Beschreibung

Die Erfindung betrifft eine tiefgefrorene, gebrauchsfertige Fruchtbackmischung.

Es ist bekannt, gebrauchsfertige Fruchtkuchen dadurch herzustellen, daß Früchte oder Fruchtstücke, gegebenenfalls mit einem Bindemittel, auf eine Teigunterlage aufgelegt und tiefgefroren werden. Diese Fruchtkuchen werden dann beim Endverbraucher aufgetaut und ausgebacken. Der Nachteil dieser Fruchtkuchen besteht darin, daß die Form des Kuchens sowie die Art der Teigunterlage vorgegeben sind und nicht mehr variiert werden können.

Ferner wurden bereits Versuche unternommen, gebrauchsfertige Mischungen aus gekochten Früchten oder Fruchtstücken mit stärkehaltigen Bindemitteln herzustellen. Diese hatten einen verhältnismäßig hohen Fruchtanteil (um etwa 90 %) und konnten nach dem Tiefgefrieren und Auftauen nicht mehrfach verwendet werden.

Die DD-A-220495 betrifft ein Verfahren zur Herstellung von trockenfruchtähnlichen Produkten, die in stückiger oder flächiger Form in gleicher Weise wie bekannte Trockenfrüchte, z.B. aus Weinbeeren, in der Süßwaren-, Nährmittel-, Back- und Dauerbackwarenindustrie eingesetzt werden können. Bei diesem Verfahren werden zu Mus zerkleinerte Obst- und/oder Gemüseprodukte mit Zucker, Gelierungsmitteln und gegebenenfalls weiteren Zusatzstoffen gemischt, geformt und auf eine Restfeuchte von weniger als 20 % getrocknet. Diese Fruchtsurrogate können, ähnlich wie getrocknete Weinbeeren, Backwaren bzw. Teig Zugesetzt werden.

Nach der FR-A-2 550 061 wird ein Konfektprodukt dadurch hergestellt, daß bei Raumtemperatur Pürees von verschiedenartigen Früchten zusammengebracht werden, so daß sie sich gegenseitig umhüllen. Diese Konfektprodukte können auch tiefgefroren werden.

Nach FR-A-236651 wird eine Tortengarnitur dadurch hergestellt, daß die Auflageelemente in einer Form zu einer festen Platte tiefgefroren werden.

Der Erfindung liegt die Aufgabe zugrunde, eine tiefgefrorene, gebrauchsfertige Fruchtbackmischung bereitzustellen, die eine rationelle gewerbliche Herstellung von Fruchtkuchen, verbunden mit einer Vielzahl von Kombinationsmöglichkeiten ermöglicht, sowohl was die Form der Kuchen, als auch die Art der Teigunterlage betrifft. Weiterhin soll eine Fruchtbackmischung bereitgestellt werden, die den Kuchenboden nicht aufweicht, die beim Backen hitzestabil und nach dem Backen schnittfest ist und bei der die Früchte auch nach dem Backen noch eine gewisse Bißfestigkeit haben.

Diese Aufgabe wird mit Hilfe einer tiefgefrorenen, gebrauchsfertigen Fruchtbackmischung gelöst, die frei von einer Teigunterlage ist und die 50 bis 80 Gew.-% ungekochte oder ungedünstete Früchte oder Fruchtteile, die mit 20 bis 50 Gew.-% einer wasserhaltigen Masse aus gequollener Stärke und Zucker bzw. Zuckeraustauschstoffen mindestens teilweise umhüllt sind, enthält.

Beispiele für geeignete Früchte sind Beerenfrüchte, wie Himbeeren, Brombeeren, Heidelbeeren, Preiselbeeren und Kiwis, sowie Kernobst, wie Kirschen, Pflaumen, Zwetschgen, Marillen, Äpfel, Birnen, Aprikosen und Pfirsiche, wobei die größeren Früchte im allgemeinen als Fruchtteile verwendet werden. Die Fruchtteile haben vorzugsweise einen Mindestdurchmesser von 4 mm. Im weiteren Sinne werden als Früchte bzw. Fruchtteile auch Zwiebeln und Rhabarber verstanden.

Die erfindungsgemäße Fruchtbackmischung kann auf einfache Weise auf einen Kuchenteigboden aufgelegt werden, wobei die Form des Kuchenteigbodens sowie der Art des Kuchenteigs je nach Bedarf variiert werden können. Dies ermöglicht eine rationelle gewerbliche Herstellung von Fruchtkuchen. Da die erfindungsgemäße Fruchtbackmischung in tiefgefrorenem Zustand auf den Kuchenteigboden aufgebracht wird, wird der Teig bei der Herstellung des Kuchens nicht erweicht. Es können auch gedeckte Fruchtkuchen hergestellt werden, indem eine weitere Teigschicht auf die Fruchtbackmischung aufgelegt wird.

Die erfindungsgemäße Fruchtbackmischung ist frostfest. Außerdem ist die erfindungsgemäße Fruchtbackmischung beim Backen hitzestabil und nach dem Backen schnittfest, d.h. die Früchte oder Fruchtteile werden beim Schneiden des Kuchens nicht aus der Umhüllungsmasse herausgerissen, und die Umhüllungsmasse klebt kaum am Messer. Da ungekochte oder ungedünstete Früchte oder Fruchtteile verwendet werden, haben diese auch nach dem Backen noch eine gewisse Bißfestigkeit.

Zur Verbesserung des Zusammenhalts zwischen den Früchten oder Fruchtteilen und der Umhüllungsmasse sowie zur Verbesserung der Schnittfestigkeit hat die Umhüllungsmasse vorzugsweise einen Trockensubstanzgehalt von etwa 15 bis 55 Gew.-%, insbesondere von etwa 20 bis 30 Gew.-%.

Die Schnittfestigkeit der Fruchtbackmischung nach dem Ausbakken kann ferner dadurch verbessert werden, daß als Ausgangsmaterial für die Umhüllungsmasse feinvermahlene native und/oder modifizierte Kartoffel- und/oder Maisstärke mit einer mittleren Teilchengröße im Bereich von 20 bis 150 µm verwendet wird.

Insbesondere enthält die wasserhaltige Umhüllungsmasse:
- 2 bis 10, vorzugsweise 5 bis 7 Gew.-% Stärke;
- 2 bis 50, vorzugsweise 25 bis 40 Gew.-% Zucker und/oder Zuckeraustauschstoffe;
- 0 bis 2, vorzugsweise 0,2 bis 0,7 Gew.-% eines Quellmittels aus der Gruppe Pektine, Algine, Carragenane, Agar, Galaktomannane, wie Johanniskernbrotmehl oder Guar;
- 0 bis 60, vorzugsweise 20 bis 30 Gew.-% einer feinteiligen Fruchtkomponente; und
- 0 bis 1, vorzugsweise 0,3 bis 0,5 Gew.-% einer Geschmackskomponente.

Das Quellmittel dient zur weiteren Verbesserung der Frostfestigkeit der Fruchtbackmischung und der Schnittfestigkeit des daraus hergestellten Fruchtkuchens.

Mit dem Zusatz der feinteiligen Fruchtkomponente wird eine Intensivierung des Fruchtgeschmacks des Kuchens erzielt, ohne daß der Zusammenhalt der Fruchtbackmischung beeinträchtigt wird. Zur Herstellung der feinteiligen Fruchtkomponente (Fruchtmus) können alle Früchte verwendet werden, die vorstehend als Beispiele angegeben sind, wobei die feinteilige Fruchtkomponente der Umhüllungsmasse auch aus anderen Früchten hergestellt sein kann als die Früchte oder Fruchtteile, die von der Umhüllungsmasse umgeben sind. Auf diese Weise können z.B. unterschiedliche Farbeffekte erzeugt werden.

Die erfindungsgemäße Fruchtbackmischung kann ferner eine Geschmackskomponente, insbesondere Säuren und/oder Aromastoffe enthalten.

Nach einer Ausführungsform liegt die erfindungsgemäße Fruchtbackmischung in Form einer zusammenhängenden Platte vor, deren Stärke etwa 1 bis 2,5 cm, vorzugsweise etwa 1,5 bis 2 cm beträgt. Diese Ausführungsform ermöglicht eine besonders rationelle gewerbliche Herstellung von Fruchtkuchen, da die Früchte oder Fruchtteile bereits von Hersteller in einer bestimmten Weise angeordnet werden können (z.B. für Pflaumen- oder Apfelkuchen) und der Verarbeiter (z.B. ein handwerklicher Bäckerbetrieb) die Platte einfach auf den Teigboden legen kann. Ferner ist es möglich, die tiefgefrorene Platte in kleinere Stücke zu unterteilen, wenn kleinere Kuchen hergestellt werden sollen. Falls nach dem Zuschneiden der Platte kleinere Reststücke übrig bleiben, (z.B. wenn aus einer viereckigen Platte ein runder Kuchen hergestellt werden soll) können diese Stücke aufgetaut und wieder zu einer größeren Platte zusammengefügt werden, ohne daß der Zusammenhalt verloren geht.

Die erfindungsgemäße Fruchtbackmischung kann ferner in Form eines Stapels aus mehreren Einzelplatten geliefert werden, die durch Trennmittel voneinander getrennt sind. Auf diese Weise kann die Bruchfestigkeit beim Versand verbessert werden. Als Trennmittel können Kunststoffolien oder Trennfette verwendet werden.

Die tiefgefrorene Platte kann ferner in einen Folienbeutel eingeschlossen sein, wodurch eine Austrocknung im tiefgefrorenen Zustand verhindert werden kann. Ferner kann die Fruchtbackmischung im Folienbeutel aufgetaut werden, und der Folienbeutel kann nach dem Einschneiden eines Schlitzes als Spritzbeutel verwendet werden.

Nach einer zweiten Ausführungsform liegt die erfindungsgemäße Fruchtbackmischung in Form von getrennten Einzelstücken vor, die als solche auf den Teigboden gelegt werden können. Der Verarbeiter hat in diesem Fall die Möglichkeit, die Einzelstücke in dem von ihm gewünschten Muster auf dem Kuchenboden anzuordnen.

Ein besonderer Effekt kann dadurch erzielt werden, daß die Fruchtbackmischung unterschiedliche Früchte bzw. Fruchtteile enthält, die entweder in einer unregelmäßigen Verteilung oder in Form eines Musters angeordnet sind (zusammenhängende Platte) bzw. angeordnet werden können (getrennte Einzelstücke).

Gegenstand der Erfindung ist auch ein Verfahren zur Herstellung der erfindungsgemäßen Fruchtbackmischung. Eine Ausführungsform ist dadurch gekennzeichnet, daß man die Früchte oder Fruchtteile auf die flächig ausgebreitete Umhüllungsmasse auflegt, gegebenenfalls mit weiterer Umhüllungsmasse überzieht und die Mischung tiefgefriert.

Bei dieser Ausführungsform erhält man eine zusammenhängende Platte. Das Überziehen der Früchte oder Fruchtstücke mit einer weiteren Umhüllungsmasse bringt den Vorteil, daß die Früchte oder Fruchtteile vollständig umhüllt sind, wodurch Eisausblühungen vermieden werden.

Eine weitere Verfahrensvariante, nach der getrennte Einzelstücke der erfindungsgemäßen Fruchtbackmischung hergestellt werden können, ist dadurch gekennzeichnet, daß man die wasserhaltige Umhüllungsmasse auf die tiefgefrorenen Früchte oder Fruchtteile auffriert und die erhaltenen getrennten Einzelstücke gegebenenfalls nochmals tiefgefriert.

Getrennte EInzelstücke können auch dadurch erhalten werden, daß man die ungefrorenen Früchte oder Fruchtteile mit der wasserhaltigen Umhüllungsmasse umhüllt und die umhüllten Einzelstücke tiefgefriert.

Vorzugsweise verwendet man bei allen diesen Verfahrensvarianten Früchte oder Fruchtteile, die durch
(a) Blanchieren;
(b) Behandlung mit Antioxidantien; und/oder
(c) Entlüften durch Evakuieren und Anreicherung mit Zuckerlösung
vorbehandelt worden sind.

Durch das Blanchieren werden die Enzyme an der Oberfläche, die eine Verfärbung der Früchte durch Oxidation an der Luft verursachen können, zerstört (z.B. bei Apfelstücken). Ein vergleichbares Ergebnis wird durch Behandlung mit Antioxidantien erzielt.

Die Entlüftung erfolgt im allgemeinen durch Evakuierung bei einem Unterdruck von etwa 0,3 bis 0,5 bar (abs.). Die Früchte oder Fruchtteile stehen hierbei mit einer Zuckerlösung und/oder einer Lösung der Antioxidantien in Berührung, die in die Poren eindringt. Auf diese Weise bleiben beim Tiefgefrieren die Zellen weitgehend erhalten, so daß die Bißfestigkeit der Fruchtteile auch nach dem Backen weitgehend erhalten bleibt. Diese Art der Vorbehandlung wird inbesondere bei porösen Fruchtteilen, wie Rhabarber, angewendet.

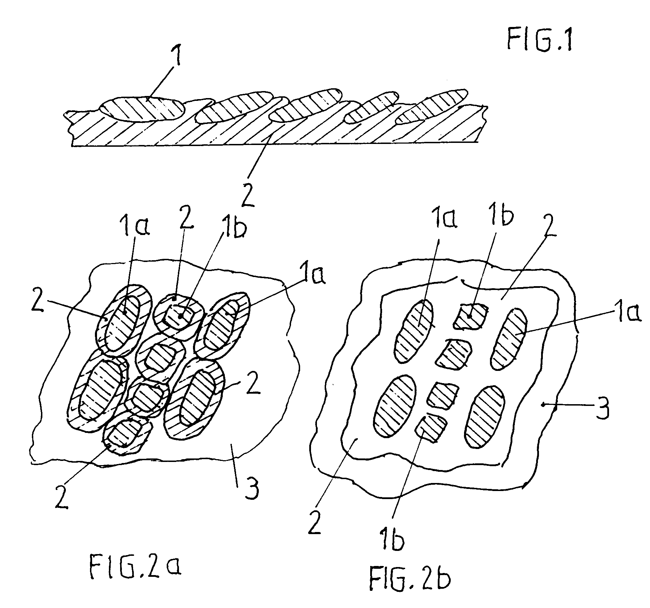

Die beiden Ausführungsformen der erfindungsgemäßen Fruchtbackmischung sind in den Figuren 1 und 2a/b dargestellt.

Fig. 1 zeigt einen Schnitt durch eine tiefgefrorene Fruchtbackmischung in Plattenform, wobei die Fruchtteile 1 (z.B. Apfelschnitze oder Pflaumenhälften) zum größten Teil von der Umhüllungsmasse 2 umgeben sind. Die Platte kann in geeigneter Weise zugeschnitten oder gebrochen und auf eine beliebige Teigunterlage (nicht dargestellt) gelegt werden.

Fig. 2a zeigt eine Draufsicht auf eine Anordnung der erfindungsgemäßen tiefgefrorenen Fruchtbackmischung in Form von getrennten Stücken (letztere sind im Schnitt dargestellt). Die Fruchtteile 1a (z.B. Apfelschnitze) sind von einer Umhüllungsmasse 2 umgeben und in Form eines bestimmten Musters auf einer Teigunterlage 3 angeordnet. Daneben sind in einer Reihe die Früchte 1b (z.B. Himbeeren) angeordnet, die ebenfalls von der Umhüllungsmasse 2 umgeben sind.

Fig. 2b zeigt den Zustand des Kuchens nach dem Ausbacken. Die Fruchtstücke 1a und die Früchte 1b sind nach dem gleichen Muster wie in Fig. 2a angeordnet, während die Umhüllungsmasse 2 zu einer zusammenhängenden Schicht auf der Teigunterlage 3 verlaufen ist.

Die Erfindung ist durch die nachstehenden Beispiele erläutert:

### BEISPIEl 1

### Herstellung einer Fruchtbackmischung in Plattenform

Zur Herstellung werden folgende Trockenbestandteile gemischt:
40 g modifizierte quellfähige Stärke mit einer mittleren Teilchengröße von 100 µm, 2 g Carragen, 2 g Zitronensäure, 3 g Puffersalze, 180 g Zucker (für Diabetiker-Gebäck die entsprechende Menge Fructose).

Die Trockenmischung wird mit 200 ml warmem Wasser gelöst und anschließend werden 10 g Himbeerkonzentrat (65° Brix) als feinteilige Fruchtkomponente und Farbgeber hinzugefügt. Die erhaltene Umhüllungsmasse wird mit 600 g Pflaumenhälften (deren Vorbehandlung nachstehend beschrieben ist) vermischt und in eine Form von 1,5 cm Höhe gegeben. Das Gewichtsverhältnis zwischen Pflaumenhälften und wasserhaltiger Umhüllungsmasse ist ca. 58 : 42.

Die Dicke der so erhaltenen Umhüllungsmasse beträgt etwa 1,5 cm, wobei die Pflaumenhälften zum größten Teil von der Umhüllungsmasse umgeben sind. Die Pflaumenhälften waren zuvor mit einer 0,4 %igen Lösung von Ascorbinsäure als Antioxidationsmittel behandelt worden, um das Braunwerden zu verhindern.

Die Fruchtbackmischung wurde bei etwa -30°C in der Schale tiefgefroren und anschließend als Platte aus der Schale entfernt. Zum Versand können mehrere Platten stapelförmig aufeinandergelegt werden, wobei ein Zusammenfrieren der Platten durch zwischengelegte Kunststoffolien verhindert werden kann.

Der Kuchenhersteller legt die tiefgefrorene Platte auf eine Teigunterlage beliebiger Art und Form. Das so erhaltene Kuchen-Vorprodukt kann im tiefgefrorenen Zustand an die Endverbraucher versandt oder gleich gebacken werden, wobei die tiefgefrorene Fruchtbackmischung zweckmäßig aufgetaut wird, bevor der Kuchen in den Backofen geschoben wird.

Der ausgebackene Fruchtkuchen hat infolge des Farbkontrastes zwischen den Pflaumenhälften und der himbeerhaltigen Umhüllungsmasse ein ansprechendes Aussehen. Der Kuchenboden ist durch die Umhüllungsmasse nicht aufgeweicht. Die Umhüllungsmasse ist schnittfest, d.h. beim Schneiden des Kuchens werden keine Pflaumenhälften aus der Umhüllungsmasse herausgerissen und die Umhüllungsmasse klebt kaum am Messer.

### BEISPIEL 2

### Herstellung einer Fruchtbackmischung in Form von getrennten Einzelstücken

Zur Herstellung werden folgende Trockenbestandteile gemischt:
45 g fein vermahlene Stärke (modifiziert) mit einer mittleren Teilchengröße von 100 µm, 86 Zucker (für Diabetiker-Gebäck die entsprechende Menge Fructose), 2,5 Carragen, 1 g Zitronensäure.

Die Trockenmischung wird mit 155 ml warmem Wasser gelöst. Die erhaltene Umhüllungsmasse, deren Trockensubstanzgehalt etwa 44 bis 45 Gew.-% beträgt und deren Viskosität etwas niedriger ist als die nach Beispiel 1, wird weiter abgekühlt auf ca. 35°C (bei dieser Temperatur ist sie noch nicht geliert).

In getrennten Arbeitsschritten werden die Fruchtstücke wie folgt vorbereitet:
400 g Apfelschnitze (etwa 5x 20 x 20 mm) werden mit einer 0,4 %igen Lösung von Ascorbinsäure als Antioxidationsmittel behandelt, um das Braunwerden zu verhindern.

300 g Rhabarberstücke mit einer Länge von etwa 10 mm werden in ein Gefäß mit 18 %iger Zuckerlösung gebracht, und das Gefäß wird in einer Unterdruckkammer einem Druck von etwa 0,3 bar (abs) ausgesetzt. Die Unterdruckkammer wird wiederum auf Atmosphärendruck gebracht, wobei die Zuckerlösung in die Poren der Rhabarberstücke eindringt. Die so getränkten Rhabarberstücke werden aus dem Gefäß entnommen und bei -30°C tiefgefroren.

Die tiefgefrorenen Apfelschnitze und Rhabarberstücke werden in die noch warme und flüssige Umhüllungsmasse getaucht, wobei die Umhüllungsmasse auf die Fruchtteile auffriert. Die so umhüllten Fruchtteile werden als getrennte Einzelstücke aus der Umhüllungsmasse entfernt und nochmals bei -30°C tiefgefroren.

Bei dieser Behandlung kühlt sich die wasserhaltige Umhüllungsmasse etwas ab, und ihre Viskosität nimmt zu. Es ist deshalb zweckmäßig, die Temperatur der Umhüllungsmasse anzuheben, wenn neue tiefgefrorene Fruchtteile eingebracht werden.

Durch geeignete Auswahl der Temperatur der tiefgefrorenen Fruchtteile und der Umhüllungsmasse sowie der Verweilzeit der tiefgefrorenen Fruchtteile in der Umhüllungsmasse kann das Gewichtsverhältnis zwischen tiefgefrorenen Fruchtteilen und Umhüllungsmasse auf einen geeigneten Wert, vorzugsweise auf 70 : 30, eingestellt werden.

Die in Einzelstücken vorliegende tiefgefrorene Fruchtbackmischung kann nun entweder in ungegelmäßiger Verteilung oder in Form eines Musters (wie es in Fig. 2a dargestellt ist) auf eine Teigunterlage aufgebracht werden. Diese Ausführungsform ist für den Versand des Kuchen-Vorproduktes nicht so geeignet wie die plattenförmige Ausführungsform von Beispiel 1. Gegenüber dieser Ausführungsform hat sie jedoch den Vorteil, daß der Hersteller des Kuchens die tiefgefrorenen Einzelstücke nach Belieben anordnen kann. Beispielsweise kann er die Rhabarberstücke in Schrift- oder Monogrammform anordnen (z.B. für einen Geburstagskuchen).

Das Ausbacken erfolgt wie bei der Ausführungsform nach Beispiel 1, wobei die Umhüllungsmasse verläuft. Obwohl die tiefgefrorene Fruchtbackmischung zunächst in getrennten Einzelstücken vorlag, ist der Zusammenhalt zwischen den Fruchtteilen und der Umhüllungsmasse sowie die Schnittfestigkeit der Umhüllungsmasse sehr gut. Trotz des etwas höheren Wassergehalts der Umhüllungsmasse ist der Kuchenboden nicht aufgeweicht, was wahrscheinlich durch den höheren Gehalt an Quellmittel bedingt ist. Die Rhabarberstücke haben auch nach dem Ausbacken eine gute Bißfestigkeit, die auf die Vorbehandlung mit der Zuckerlösung zurückzuführen ist.

## Patentansprüche

1. Tiefgefrorene, gebrauchsfertige Fruchtbackmischung, die frei von einer Teigunterlage ist, enthaltend 50 bis 80 Gew.-% ungekochte oder ungedünstete Früchte oder Fruchtteile, die mit 20 bis 50 Gew.-% einer wasserhaltigen Masse aus gequollener Stärke und Zucker bzw. Zuckeraustauschstoffen mindestens teilweise umhüllt sind.

2. Fruchtbackmischung nach Anspruch 1, dadurch gekennzeichnet, daß die Fruchtstücke einen Mindestdurchmesser von etwa 4 mm haben.

3. Fruchtbackmischung nach Anspruch 1 oder 2, dadurch gekennzeichnet, daß die Umhüllungsmasse einen Trockensubstanzgehalt von etwa 15 bis 55 Gew.-%, vorzugsweise von etwa 20 bis 30 Gew.-%, hat.

4. Fruchtbackmischung nach einem der Ansprüche 1 bis 3, dadurch gekennzeichnet, daß als Ausgangsmaterial für die Umhüllungsmasse feinvermahlene native und/oder modifizierte Kartoffel- und/ oder Maisstärke mit einer mittleren Teilchengröße im Bereich von 20 bis 150 µm verwendet wird.

5. Fruchtbackmischung nach einem der Ansprüche 1 bis 4, dadurch gekennzeichnet, daß die wasserhaltige Umhüllungsmasse
- 2 bis 10, vorzugsweise 5 bis 7 Gew.-% Stärke;
- 2 bis 50, vorzugsweise 25 bis 40 Gew.-% Zucker und/oder Zuckeraustauschstoffe;
- 0 bis 2, vorzugsweise 0,2 bis 0,7 Gew.-% eines Quellmittels aus der Gruppe Pektine, Algine, Carragenane, Agar, Galaktomannane, wie Johanniskernbrotmehl oder Guar;
- 0 bis 60, vorzugsweise 20 bis 30 Gew.-% einer feinteiligen Fruchtkomponente; und
- 0 bis 1, vorzugsweise 0,3 bis 0,5 Gew.-% einer Geschmackskomponente enthält.

6. Fruchtbackmischung nach Anspruch 5, dadurch gekennzeichnet, daß die Geschmackskomponente Säuren und/oder Aromastoffe enthält.

7. Fruchtbackmischung nach einem der Ansprüche 1 bis 5 in Form einer zusammenhängenden Platte.

8. Fruchtbackmischung nach Anspruch 7, dadurch gekennzeichnet, daß die Stärke der Platte etwa 1 bis 2,5 cm, vorzugsweise etwa 1,5 bis 2 cm, beträgt.

9. Fruchtbackmischung nach Anspruch 7 oder 8, in Form eines Stapels aus mehreren Einzelplatten, die durch Trennmittel voneinander getrennt sind.

10. Fruchtbackmischung nach Anspruch 7 oder 8, dadurch gekennzeichnet, daß die Platte in einen Folienbeutel eingeschlossen ist.

11. Fruchtbackmischung nach einem der Ansprüche 1 bis 6 in Form von getrennten Einzelstücken.

12. Fruchtbackmischung nach einem der Ansprüche 1 bis 10, dadurch gekennzeichnet, daß sie unterschiedliche Früchte bzw. Fruchtteile enthält, die entweder in einer unregelmäßigen Verteilung oder in Form eines Musters angeordnet sind (zusammenhängende Platte) bzw. angeordnet werden können (getrennte Einzelstücke).

13. Verfahren zur Herstellung der Fruchtbackmischung nach einem der Ansprüche 1 bis 8 und 12, dadurch gekennzeichnet, daß man die Früchte oder Fruchtteile auf die flächig ausgebreitete Umhüllungsmasse anflegt, gegebenenfalls mit weiterer Umhüllungsmasse überzieht und die Mischung tiefgefriert.

14. Verfahren zur Herstellung der Fruchtbackmischung nach einem der Ansprüche 1 bis 6, 11 und 12, dadurch gekennzeichnet, daß man die wasserhaltige Umhüllungsmasse auf die tiefgefrorenen Früchte oder Fruchtteile auffriert und die erhaltenen getrennten Einzelstücke gegebenenfalls nochmals tiefgefriert.

15. Verfahren zur Herstellung der Fruchtbackmischung nach einem der Ansprüche 1 bis 6, 11 und 12, dadurch gekennzeichnet, daß man die ungefrorenen Früchte oder Fruchtteile mit der wasserhaltigen Umhüllungsmasse umhüllt und die umhüllten Einzelstücke tiefgefriert.

16. Verfahren nach einem der Ansprüche 13 bis 15, dadurch gekennzeichnet, daß man Früchte oder Fruchtteile verwendet, die durch
(a) Blanchieren;
(b) Behandlung mit Antioxidantien; und/oder
(c) Entlüften durch Evakuieren und Anreicherung mit Zuckerlösung
vorbehandelt worden sind.

## Claims

1. Deep-frozen, ready-to-use, cookable fruit mixture which is free from a dough support, comprising 50 to 80 % by weight of unboiled or unsteamed fruits or fruit parts which are coated, at least partially, with 20 to 50 % by weight of a water-containing mass of swollen starch and sugar or sugar substitutes.

2. Cookable fruit mixture according to claim 1, characterized in that the fruit pieces have a minimum diameter of about 4 mm.

3. Cookable fruit mixture according to claims 1 or 2, characterized in that the coating mass has a dry substance content of about 15 to 55 % by weight, preferably from about 20 to 30 % by weight.

4. Cookable fruit mixture according to any one of claims 1 to 3, characterized in that finely ground native and/or modified potato and/or maize starch having an average particle size in the range of from 20 to 150 µm is used as the starting material for the coating mass.

5. Cookable fruit mixture according to any one of claims 1 to 4, characterized in that the water-containing coating mass contains
- 2 to 10, preferably 5 to 7 % by weight of starch;
- 2 to 50, preferably 25 to 40 % by weight of sugar and/or sugar substitutes;
- 0 to 2, preferably 0.2 to 0.7 % by weight of a swelling agent selected from the group of pectins, algins, carrageenans, agar, galactomannanes, such as locust bean gum powder or guar;
- 0 to 60, preferably 20 to 30 % by weight of a finely divided fruit component; and
- 0 to 1, preferably 0.3 to 0.5 % by weight of a flavouring component.

6. Cookable fruit mixture according to claim 5, characterized in that the flavouring component comprises acids and/or aroma substances.

7. Cookable fruit mixture according to any one of claims 1 to 5, in the form of a coherent plate.

8. Cookable fruit mixture according to claim 7, characterized in that the thickness of the plate is about 1 to 2.5 cm, preferably about 1.5 to 2 cm.

9. Cookable fruit mixture according to claims 7 or 8, in the form of a pile of several individual plates which are separated by means of separating agents.

10. Cookable fruit mixture according to claim 7 or 8, characterized in that the plate is enclosed in a foil bag.

11. Cookable fruit mixture according to any one of claims 1 to 6, in the form of separate individual pieces.

12. Cookable fruit mixture according to any one of claims 1 to 10, characterized in that it contains different fruits or fruit parts which are either arranged in a random distribution or in a pattern (coherent plate) or may be arranged in such a manner (separate individual pieces).

13. Method of producing the cookable fruit mixture according to any one of claims 1 to 8 and 12, characterized in that the fruits or fruit pieces placed on the spread-out coating mass, are optionally coated with additional coating mass, and the mixture is deep-frozen.

14. Method of producing the cookable fruit mixture according any one of claims 1 to 6, 11 and 12, characterized in that the water-containing coating mass is frozen upon the deep-frozen fruits or fruit parts, and optionally the resulting separate individual pieces are deep-frozen again.

15. Method of producing the cookable fruit mixture according to claims 1 to 6, 11 and 12, characterized in that the unfrozen fruits or fruit pieces are coated with the water-containing coating mass, and the coated individual pieces are deep-frozen.

16. Method according to any one of claims 13 to 15, characterized in that fruits or fruit pieces are used which have been pre-treated by (a) blanching; (b) treatment with antioxidants; and/or (c) de-aeration by evacuation and enrichment with sugar solution.

## Revendications

1. Mélange à cuire comportant des fruits, surgelé, prêt à l'emploi, qui est exempt d'une base en pâte et qui contient 50 à 80% en poids de fruits ou fragments de fruits non-cuits ou non-cuits à l'étuvée, qui sont enveloppés au moins partiellement par 20 à 50% en poids d'une masse contenant de l'eau, constituée d'amidon gonflé et de sucre ou de substituts du sucre.

2. Mélange à cuire comportant des fruits selon la revendication 1, caractérisé en ce que les morceaux de fruits présentent un diamètre minimum d'environ 4 mm.

3. Mélange à cuire comportant des fruits selon la revendication 1 ou 2, caractérisé en ce que la masse enveloppante présente une teneur en matière sèche d'environ 15 à environ 55% en poids, de préférence d'environ 20 à environ 30% en poids.

4. Mélange à cuire comportant des fruits selon l'une quelconque des revendications 1 à 3, caractérisé en ce que l'on utilise comme matière première pour la masse enveloppante, de l'amidon de pomme de terre et/ou de l'amidon de maïs, naturel et/ou modifié, finement broyé, présentant une taille moyenne de particule comprise dans le domaine allant de 20 à 150 µm.

5. Mélange à cuire comportant des fruits selon l'une quelconque des revendications 1 à 4, caractérisé en ce que la masse enveloppante renfermant de l'eau contient :
- 2 à 10% en poids, de préférence 5 à 7% en poids d'amidon,
- 2 à 50% en poids, de préférence 25 à 40% en poids de sucre et/ou de substituts du sucre,
- 0 à 2% en poids, de préférence 0,2 à 0,7% en poids d'un agent de gonflement choisi dans le groupe constitué des pectines, des algines, des carraghénines, de l'agar et du galactomannane, comme la farine de caroube ou la gomme-guar,
- 0 à 60% en poids, de préférence 20 à 30% en poids d'un constituant fruits finement divisés, et
- 0 à 1% en poids, de préférence 0,3 à 0,5% en poids d'un constituant pour le goût.

6. Mélange à cuire comportant des fruits selon la revendication 5, caractérisé en ce que le constituant pour le goût contient des acides et/ou des produits aromatisants.

7. Mélange à cuire comportant des fruits selon l'une quelconque des revendications 1 à 5, sous la forme d'une plaque cohérente.

8. Mélange à cuire comportant des fruits selon la revendication 7, caractérisé en ce que l'épaisseur de la plaque est d'environ 1 à environ 2,5 cm, de préférence d'environ 1,5 à environ 2 cm.

9. Mélange à cuire comportant des fruits selon la revendication 7 ou 8, sous la forme d'une pile de plusieurs plaques individuelles qui sont séparées l'une de l'autre par un agent de séparation.

10. Mélange à cuire comportant des fruits selon la revendication 7 ou 8, caractérisé en ce que la plaque est enfermée dans un sachet en feuille métallique.

11. Mélange à cuire comportant des fruits selon l'une quelconque des revendications 1 à 6, sous la forme de morceaux individuels séparés.

12. Mélange à cuire comportant des fruits selon l'une quelconque des revendications 1 à 10, caractérisé en ce qu'il contient des fruits ou fragments de fruits différents, qui sont disposés suivant une répartition irrégulière ou suivant un modèle (plaque cohérente), ou qui peuvent être disposés ainsi (morceaux individuels séparés).

13. Procédé de préparation du mélange à cuire comportant des fruits selon l'une quelconque des revendications 1 à 8 et 12, caractérisé en ce que l'on dispose les fruits ou fragments de fruits sur la masse enveloppante étalée en nappe, on recouvre éventuellement avec de la masse enveloppante supplémentaire et on congèle le mélange à basse température.

14. Procédé de préparation du mélange à cuire comportant des fruits selon l'une quelconque des revendications 1 à 6, 11 et 12, caractérisé en ce que l'on congèle la masse enveloppante contenant de l'eau sur les fruits ou fragments de fruits surgelés et congèle éventuellement encore une fois à basse température les morceaux individuels séparés obtenus.

15. Procédé de préparation du mélange à cuire comportant des fruits selon l'une quelconque des revendications 1 à 6, 11 et 12, caractérisé en ce que l'on enveloppe les fruits ou fragments de fruits non congelés avec la masse enveloppante contenant de l'eau et congèle à basse température les morceaux individuels enveloppés.

16. Procédé selon l'une quelconque des revendications 13 à 15, caractérisé en ce que l'on utilise des fruits ou fragments de fruits qui ont été traités au préalable par :
(a) blanchiment,
(b) traitement avec des antioxydants, et/ou
(c) désaération en faisant le vide et enrichissement en solution de sucre.
